# EUROPEAN PATENT SPECIFICATION

(11) **EP 0 708 374 B1**
(45) Date of publication and mention of the grant of the patent: **04.08.1999**
(21) Application number: 95115320.4
(22) Date of filing: 28.09.1995
(51) Int. Cl.: G03G 5/06

(54) **Electrophotographic photoreceptor**
Elektrophotographischer Photorezeptor
Photorécepteur électrophotographique

(30) Priority: 30.09.1994 JP 23762294
(43) Date of publication of application: 24.04.1996
(73) Proprietor: MITSUBISHI PAPER MILLS, LTD., Chiyoda-ku Tokyo (JP)
(72) Inventor: Doi, Kunihiro, c/o Mitsubishi Paper Mills Ltd., Tokyo (JP); Nagamura, Hideki, c/o Mitsubishi Paper Mills Ltd., Tokyo (JP); Yamanobe, Susumu, c/o Mitsubishi Paper Mills Ltd., Tokyo (JP); Itoh, Akira, c/o Mitsubishi Paper Mills Ltd., Tokyo (JP)
(74) Representative: Hansen, Bernd, Dr. Dipl.-Chem.

(56) References cited:
- EP-A- 0 578 181
- US-A- 4 999 269

## Description

The present invention relates to an electrophotographic photoreceptor, and, more particularly, to an electrophotographic photoreceptor which has a light-sensitive layer containing an azo pigment. Furthermore, it relates to an electrophotographic photoreceptor which is high in sensitivity and excellent in characteristics of repeated use.

Hitherto, as photoreceptors used in electrophotography, those which have a light-sensitive layer mainly composed of inorganic photoconductors such as selenium, cadmium sulfide, zinc oxide and silicon are widely known. However, these are not necessarily satisfactory in sensitivity, heat stability, moisture resistance and endurance, and, especially, toxicity of selenium and cadmium sulfide imposes restrictions on production and handling of the photoreceptors.

On the other hand, electrophotographic photoreceptors having a light-sensitive layer mainly composed of organic photoconductive compounds have many advantages such as relatively easy production, cheapness, easy handling and superior heat stability as compared with selenium photoreceptors and have recently been much noticed.

As these organic photoconductive compounds, poly-N-vinylcarbazole is well known, and electrophotographic photoreceptors having a light-sensitive layer mainly composed of a charge transfer complex formed of the poly-N-vinylcarbazole and a Lewis acid such as 2,4,7-trinitro-9-fluorenone are disclosed in Japanese Patent Kokoku No.50-10496. However, they are not necessarily satisfactory in sensitivity, film-formability and endurance.

On the other hand, laminate or dispersion type photoreceptors called function-separated type photoreceptors in which the charge generating function and the charge transporting function are allotted to different materials respectively have the advantages that the range for selection of the materials is wide and electrophotographic photoreceptors having optional characteristics such as charging characteristics, sensitivity and endurance can be relatively easily prepared.

Heretofore, various materials have been proposed as the charge generation materials and the charge transport materials. For example, an electrophotographic photoreceptor having a light-sensitive layer comprising a charge generation layer composed of amorphous selenium and a charge transport layer mainly composed of poly-N-vinylcarbazole has been put to practical use. However, this has the defect that the charge generation layer composed of amorphous selenium is inferior in endurance.

Furthermore, use of organic dyes or pigments as the charge generation material has been proposed, and, for example, electrophotographic photoreceptors containing monoazo pigments or bisazo pigments in the light-sensitive layer are disclosed and known in Japanese Patent Kokoku Nos.48-30513 and 56-11945 and Japanese Patent Kokai Nos.52-4241 and 54-46558.

US-4999269 discloses electrophotographic photoreceptors comprising bisazocompounds having both diazogroups linked via a phenylene group to a 1.2 diazole heterogroup in the 1 and 4 positions.

There have been proposed various electrophotographic photoreceptors containing low-molecular weight organic photoconductors comprising, in combination, the above-mentioned charge generation materials and charge transport materials such as triphenylamines, stilbenes and hydrazones. These photoreceptors mainly composed of the above organic photoconductive compounds are increasingly used in the fields of electrostatic copying machines and photoprinters.

However, these copying machines and printers are yearly demanded to have high functions and high speed output, and the conventional photoreceptors do not possess light-sensitivity and light-responsiveness enough to satisfy these demands. Furthermore, when organic photoreceptors are subjected to complicated processes of charging, exposing and discharging, the compounds constituting the photoreceptors not only serve to generate or transport the charge, but also receive a stimulus with ozone, light or the like in a high electric field. Therefore, they still suffer from the problems in use that with repetition of the process, the initial potential after charging decreases or the residual potential after discharging increases. Furthermore, if these photoreceptors are exposed to room light for a long time when they are fitted in the copying machines or printers, the charging potential just after fitting them decreases. Moreover, in the case of using azo pigments as charge generation materials, they must be in the form of a dispersion for coating on a conductive support. However, stable dispersions cannot be obtained from pigments having certain structures, and, hence, serious problems have often occurred in production.

It is, therefore, an object of the present invention to provide an electrophotographic photoreceptor which has high sensitivity and shows substantially no fluctuation in charging potential and residual potential during repeated use in an electrophotogrpahic processing and, furthermore, does not show fluctuation in potential upon exposure to diffused room light.

It is another object to provide an electrophotographic photoreceptor which can be easily produced.

As a result of intensive research conducted by the inventors, it has been found that an electrophotographic photoreceptor having a light-sensitive layer containing an azo pigment represented by the following formula (I) is effective to attain the above objects: 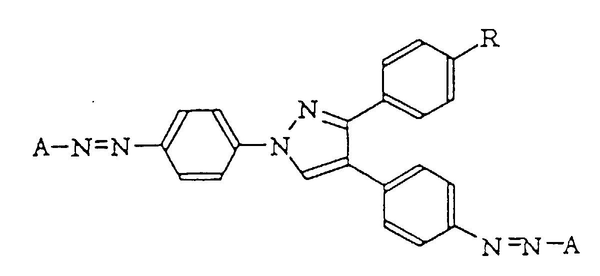 wherein R is an unsubstituted or substituted alkoxy group of 3 or more carbon atoms and A is a coupler residue. Thus, the present invention has been accomplished.

The present invention is an electrophotographic photoreceptor, characterized by having, on a conductive support, a light-sensitive layer containing the azo pigment represented by the above formula (I).

That is, by using the azo pigment represented by the above formula (I) as a photoconductive material of electrophotographic photoreceptors and, furthermore, by using the azo pigment as a charge generation material of function-separated type electrophotographic photoreceptors with utilizing only the excellent charge generating function of the said azo pigment, the present invention can provide electrophotographic photoreceptors which are excellent in sensitivity, retention of charge, residual potential, etc., hardly deteriorate with fatigue even when repeatedly used, and can exhibit stable characteristics with undergoing no change in the above-mentioned characteristics against heat or light.

Typical examples of R in the above formula (I) are alkoxy groups of 3 or more carbon atoms, such as n-propoxy group, isopropoxy group, n-butoxy group, isobutoxy group, tert-butoxy group, n-pentyloxy group, n-hexyloxy group, cyclohexyloxy group, n-decyloxy group, 3-methoxy-1-propoxy group, 4-ethoxy-1-butoxy group, benzyloxy group, 2-methylbenzyloxy group, 4-methylbenzyloxy group, and 4-methoxybenzyloxy group.

A in the formula (I) represents a coupler residue which reacts with diazo compounds. Examples of the coupler residues are those which have the structure represented by the following formula: 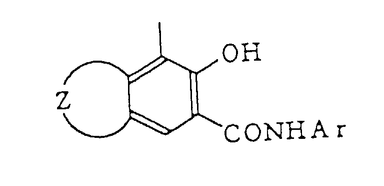 wherein Z represents a group of atoms necessary to form an unsubstituted or substituted aromatic ring or heterocyclic ring which condenses with the benzene ring, and Ar represents an unsubstituted or substituted aryl group or heterocyclic group.

Examples of the aromatic ring or heterocyclic ring represented by Z include aromatic rings such as benzene ring, methylbenzene ring, chlorobenzene ring, naphthalene ring and anthracene ring, and heterocyclic rings such as furan ring, pyridine ring, ethylpyridine ring, carbazole ring, quinoline ring, benzothiophene ring, chlorobenzothiophene ring, benzofuran ring and benzocarbazole ring. Examples of Ar include aromatic rings such as phenyl group, o-methylphenyl group, o-chlorophenyl group, 2-methyl-4-chlorophenyl group, naphthyl group, anthryl group, anthronyl group and anthraquinonyl group and heterocyclic rings such as thiazolyl group, benzothiazolyl group and carbazolyl group.

Further specific examples of the coupler residues represented by the above formula are shown in the following table.

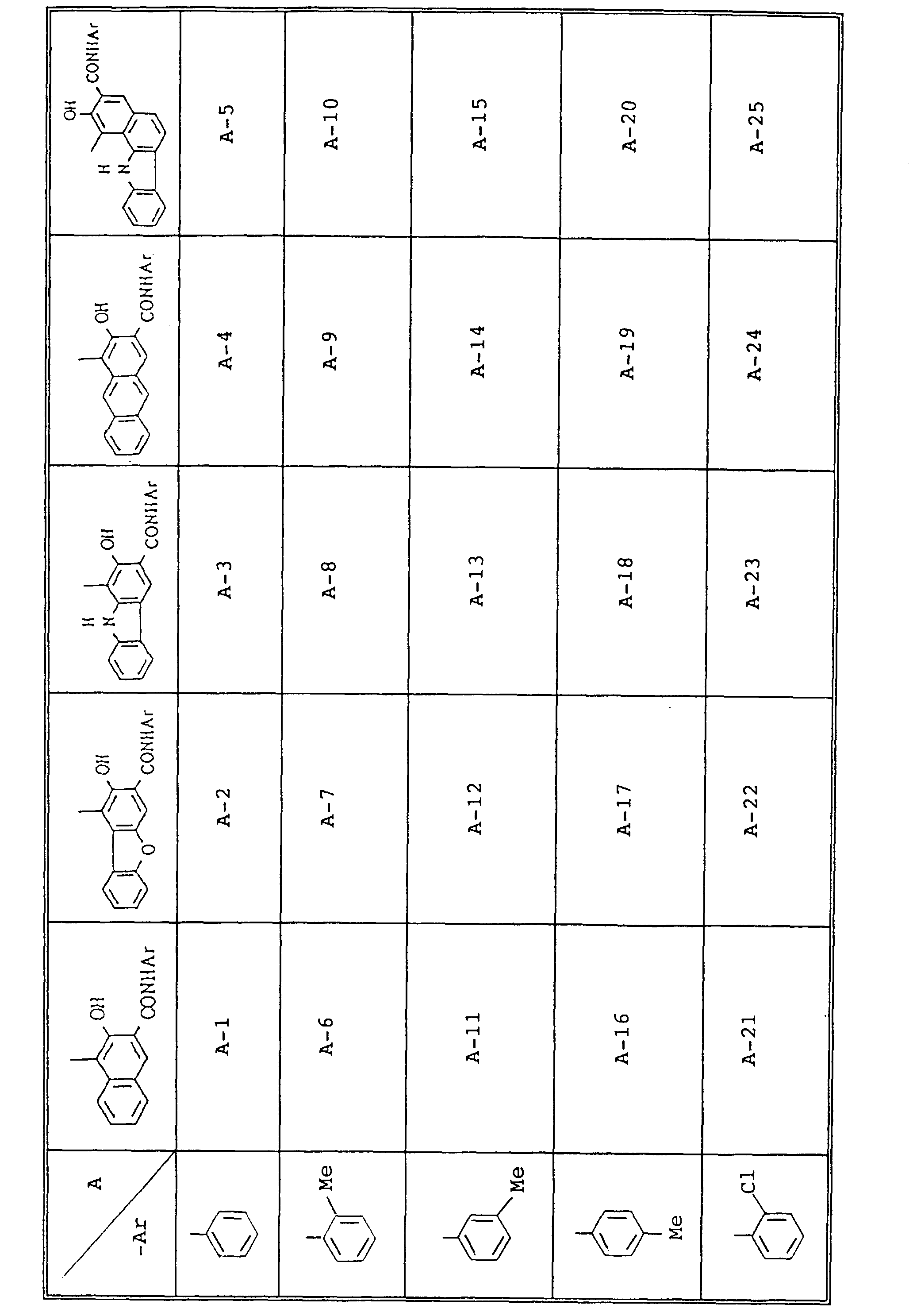

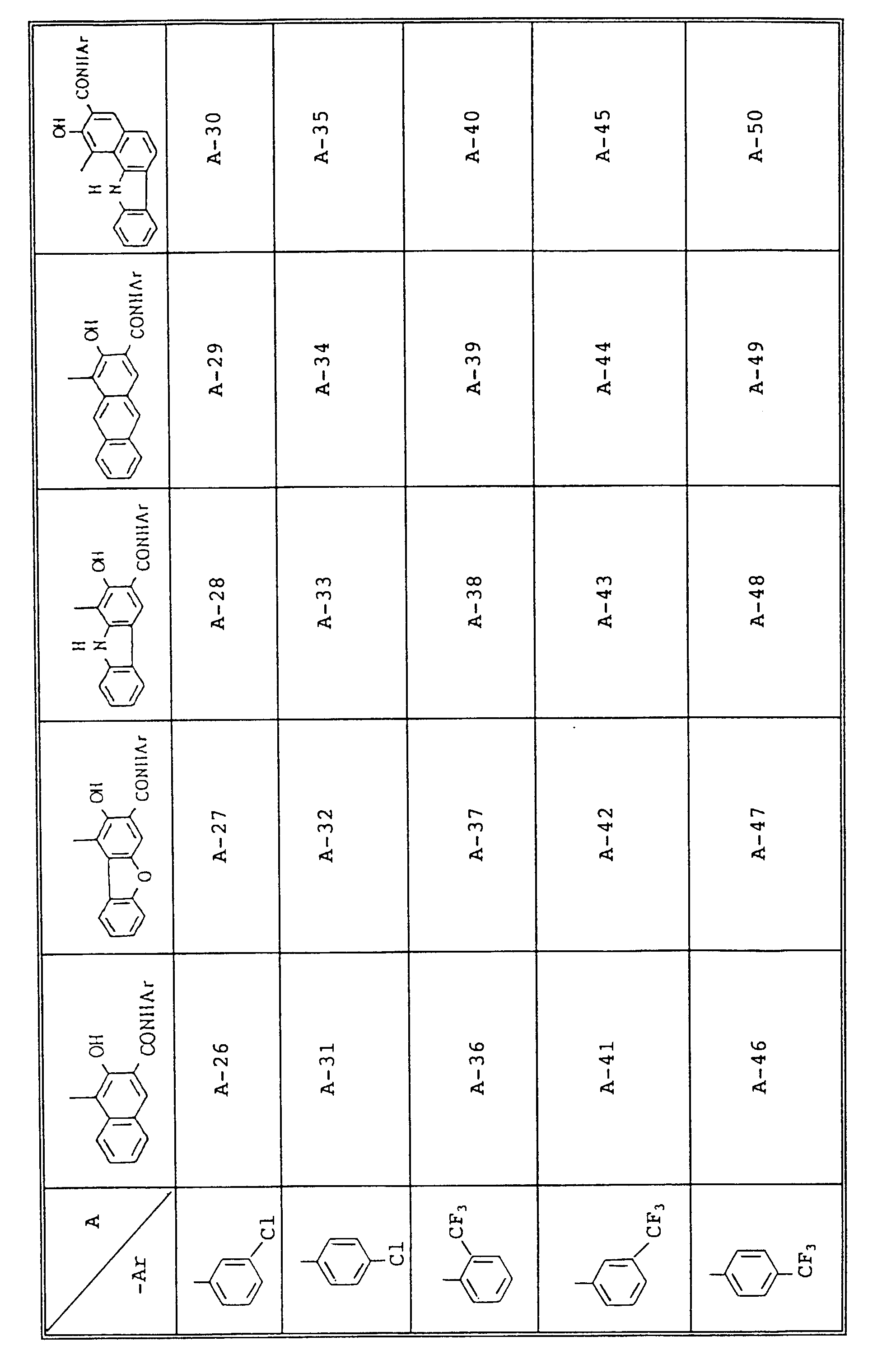

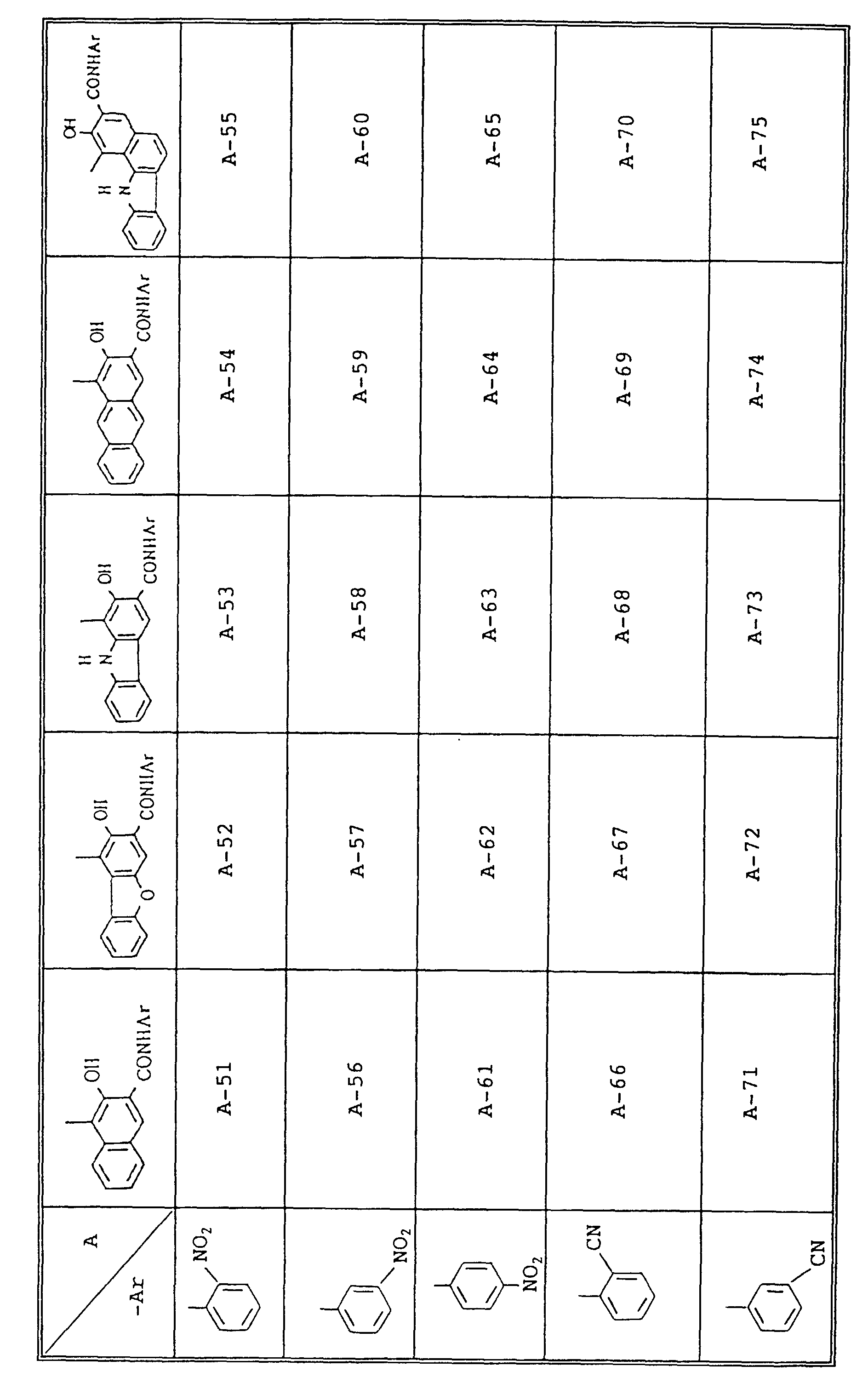

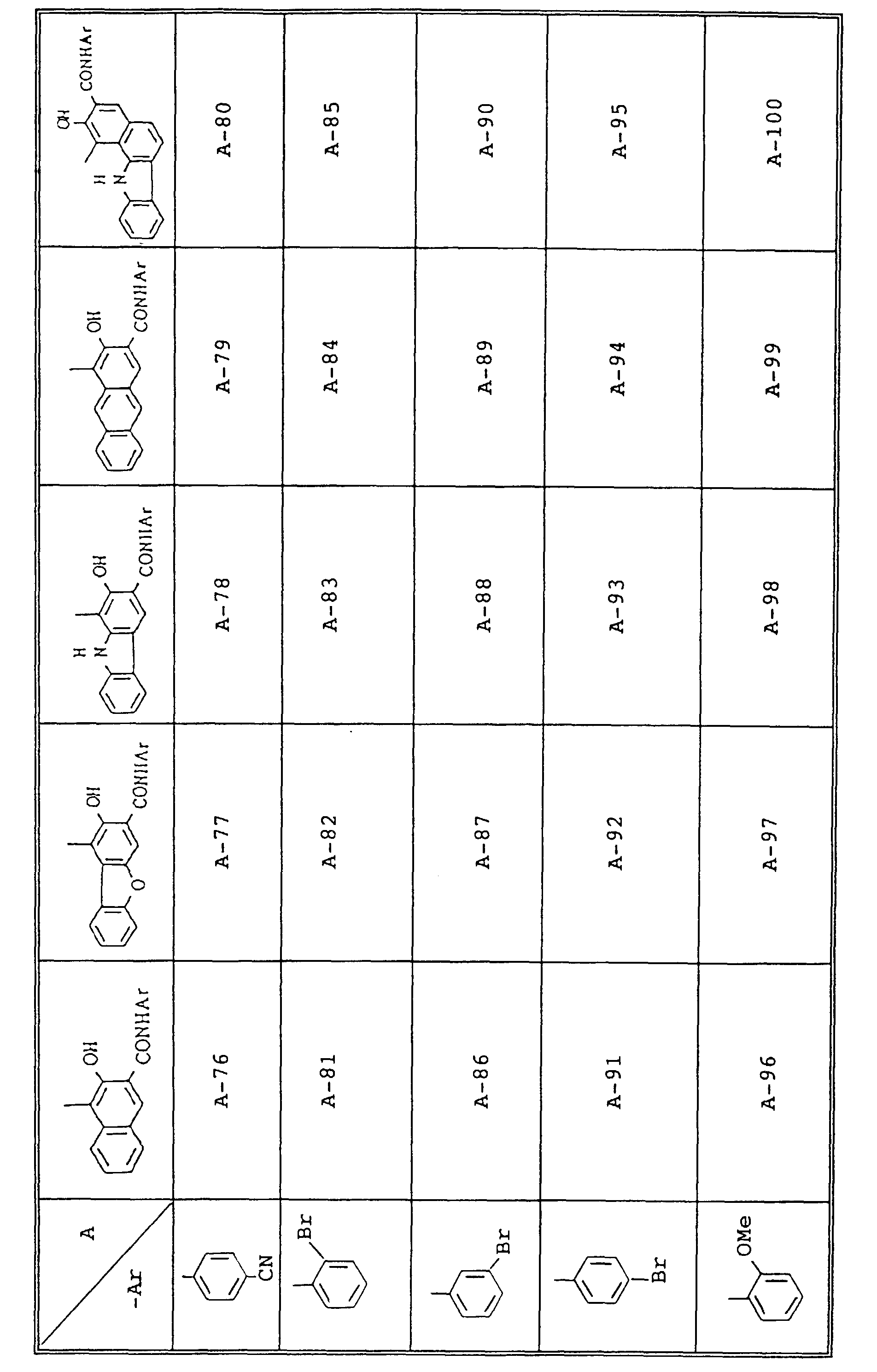

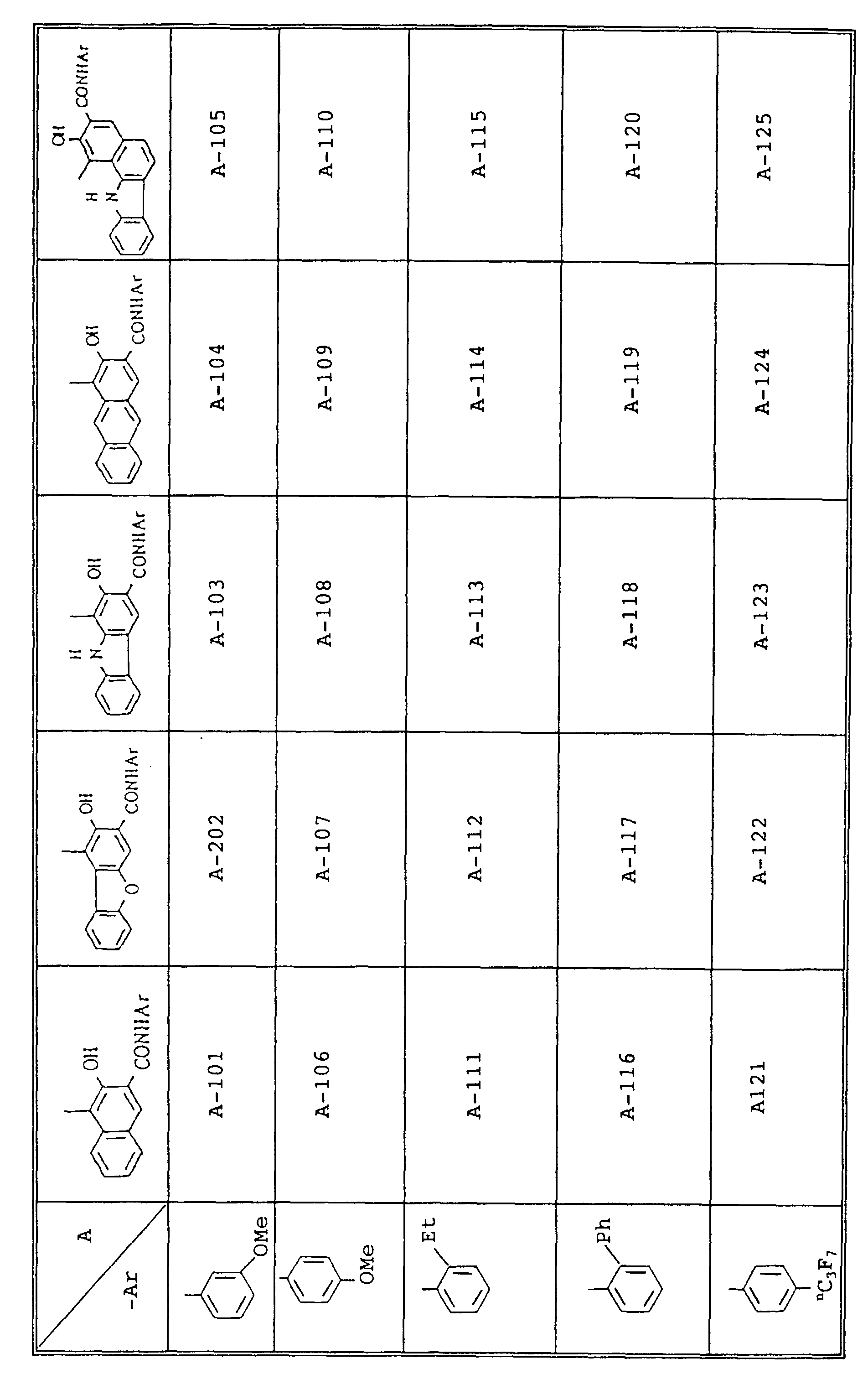

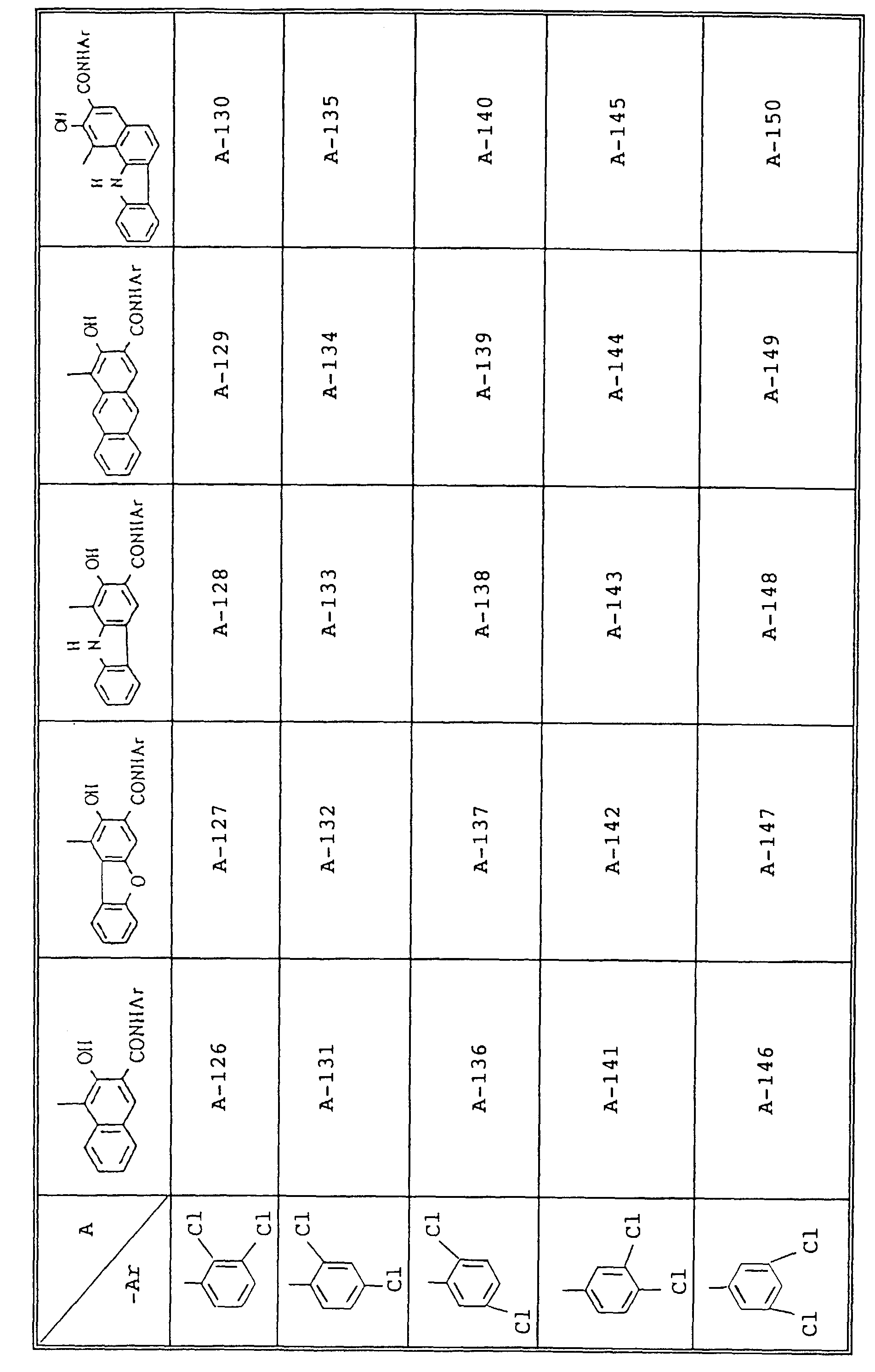

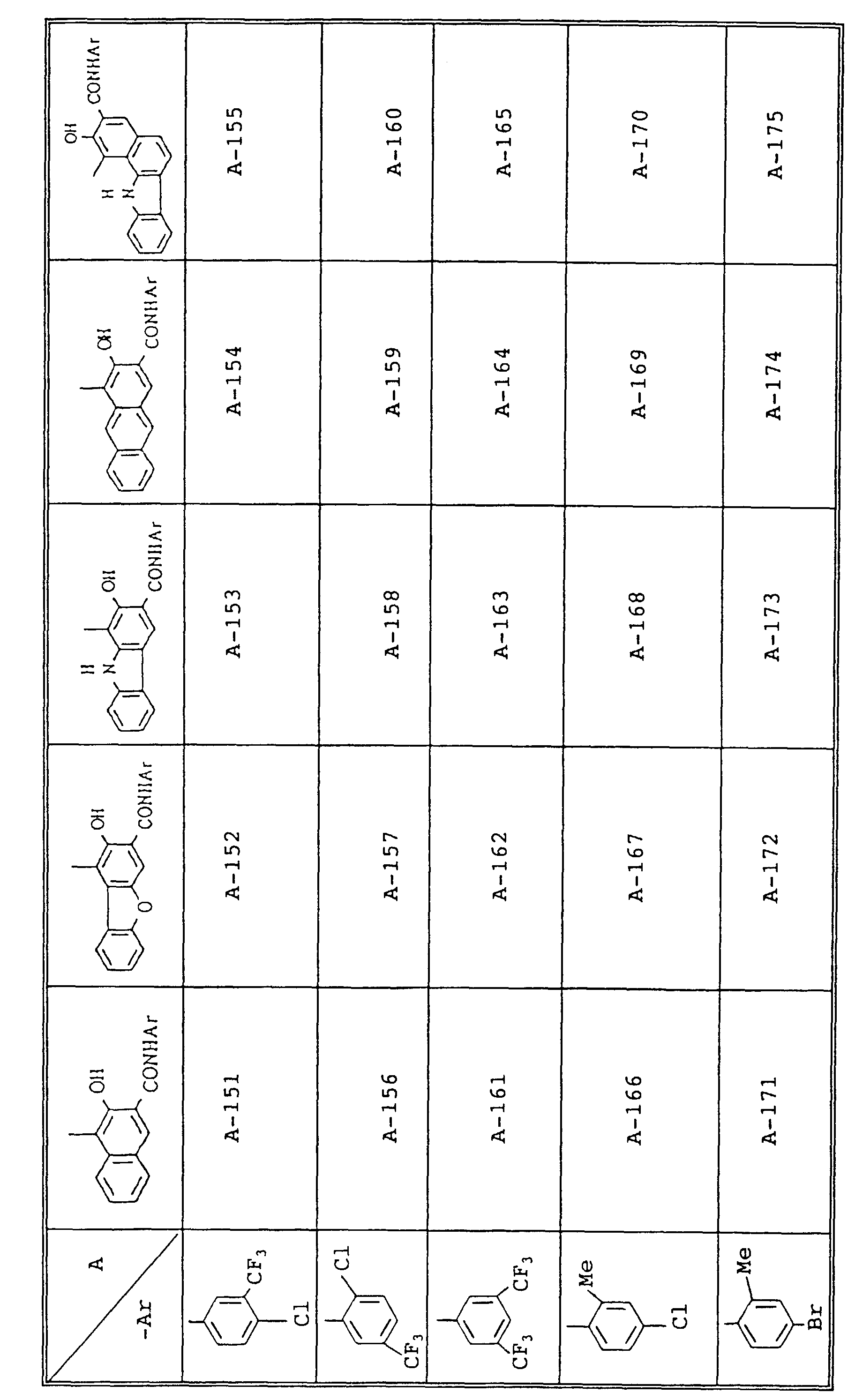

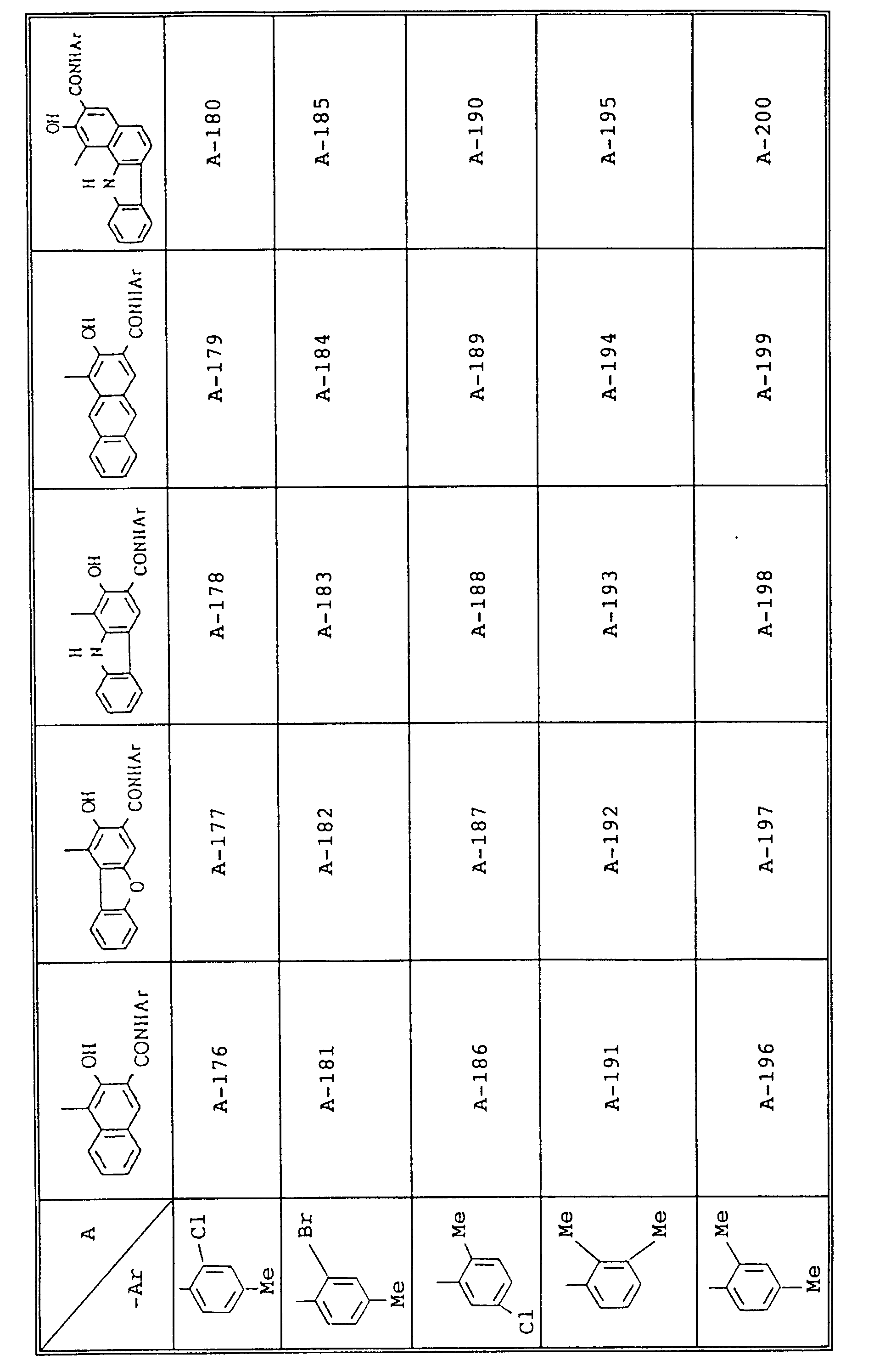

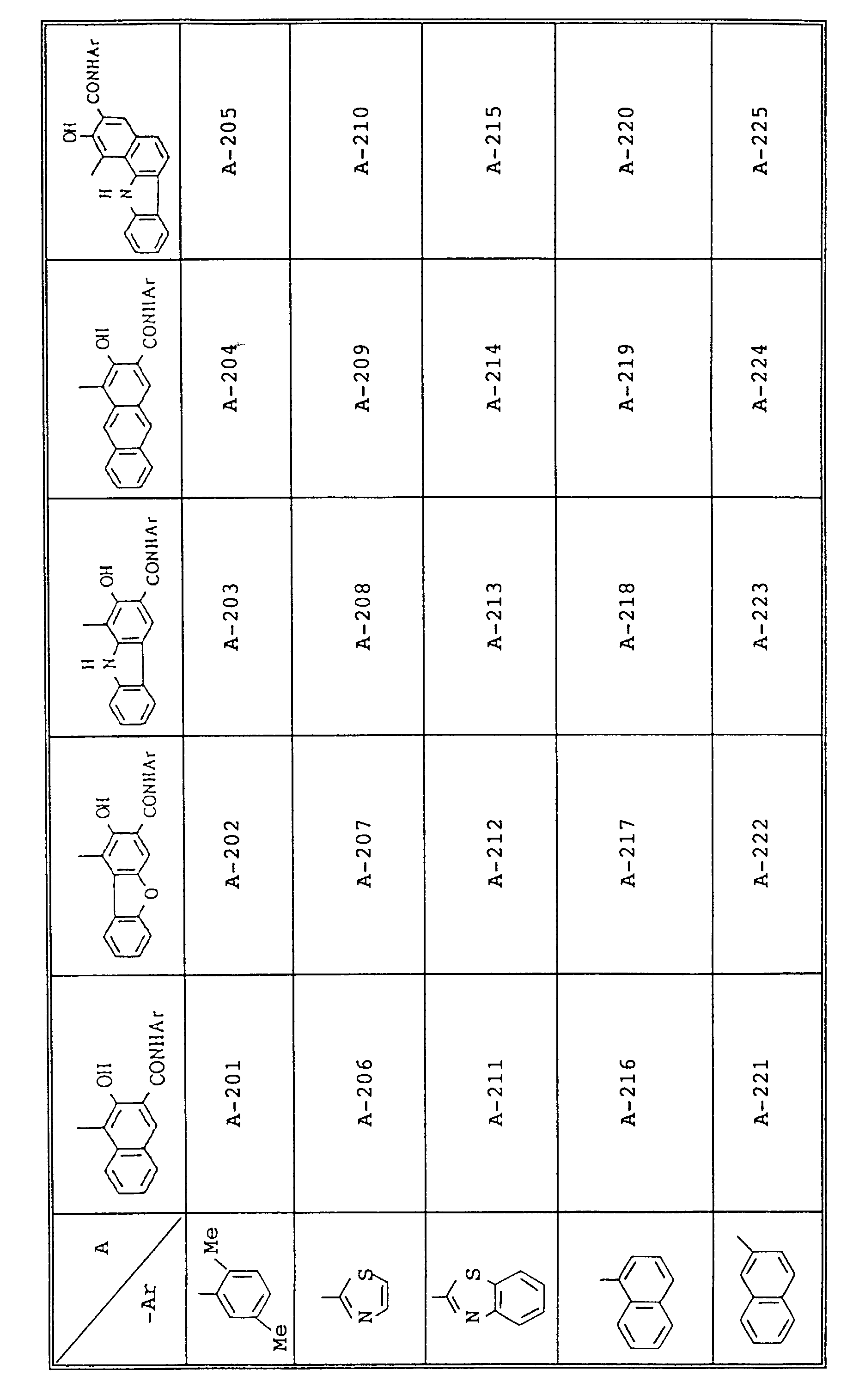

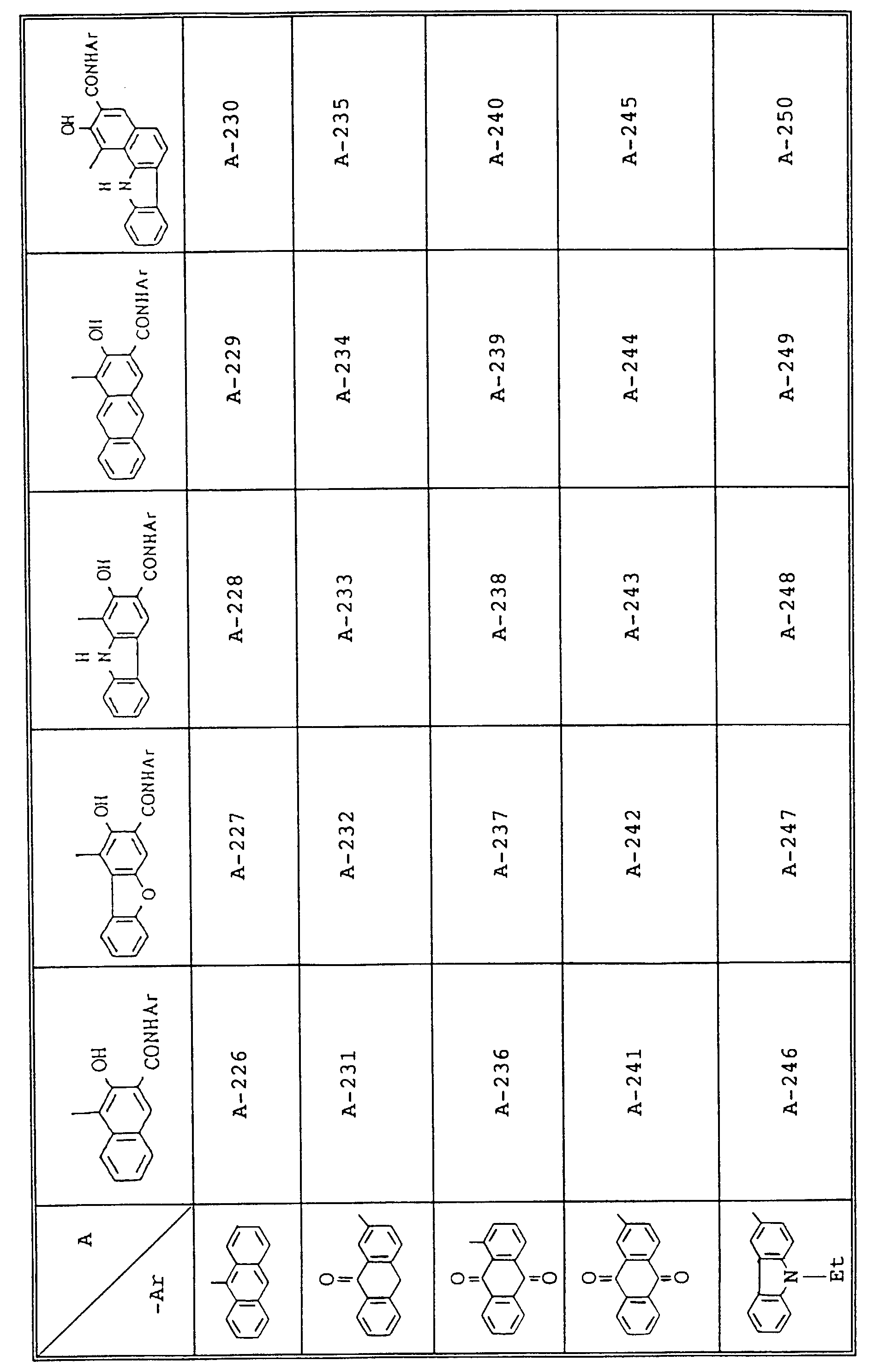

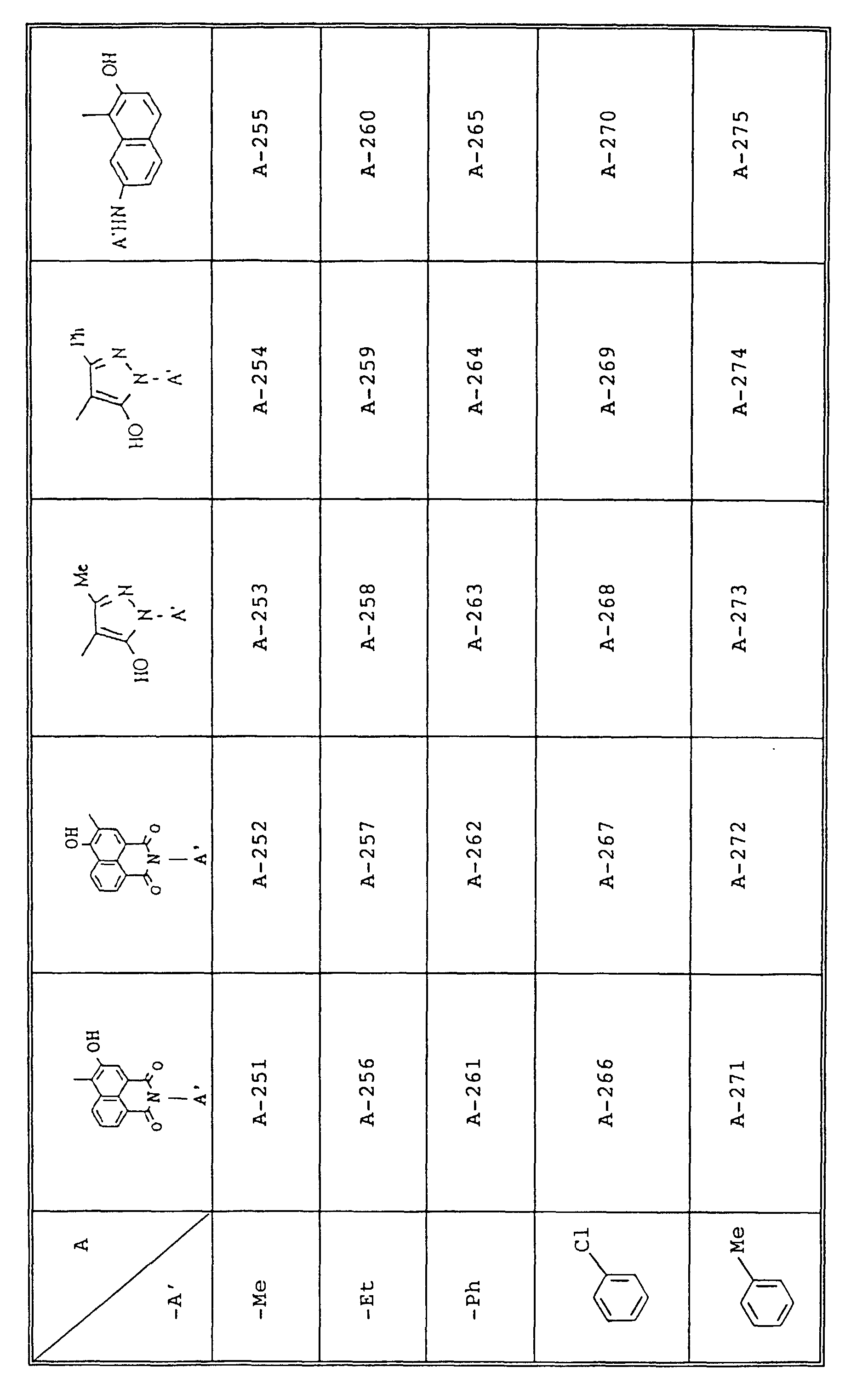

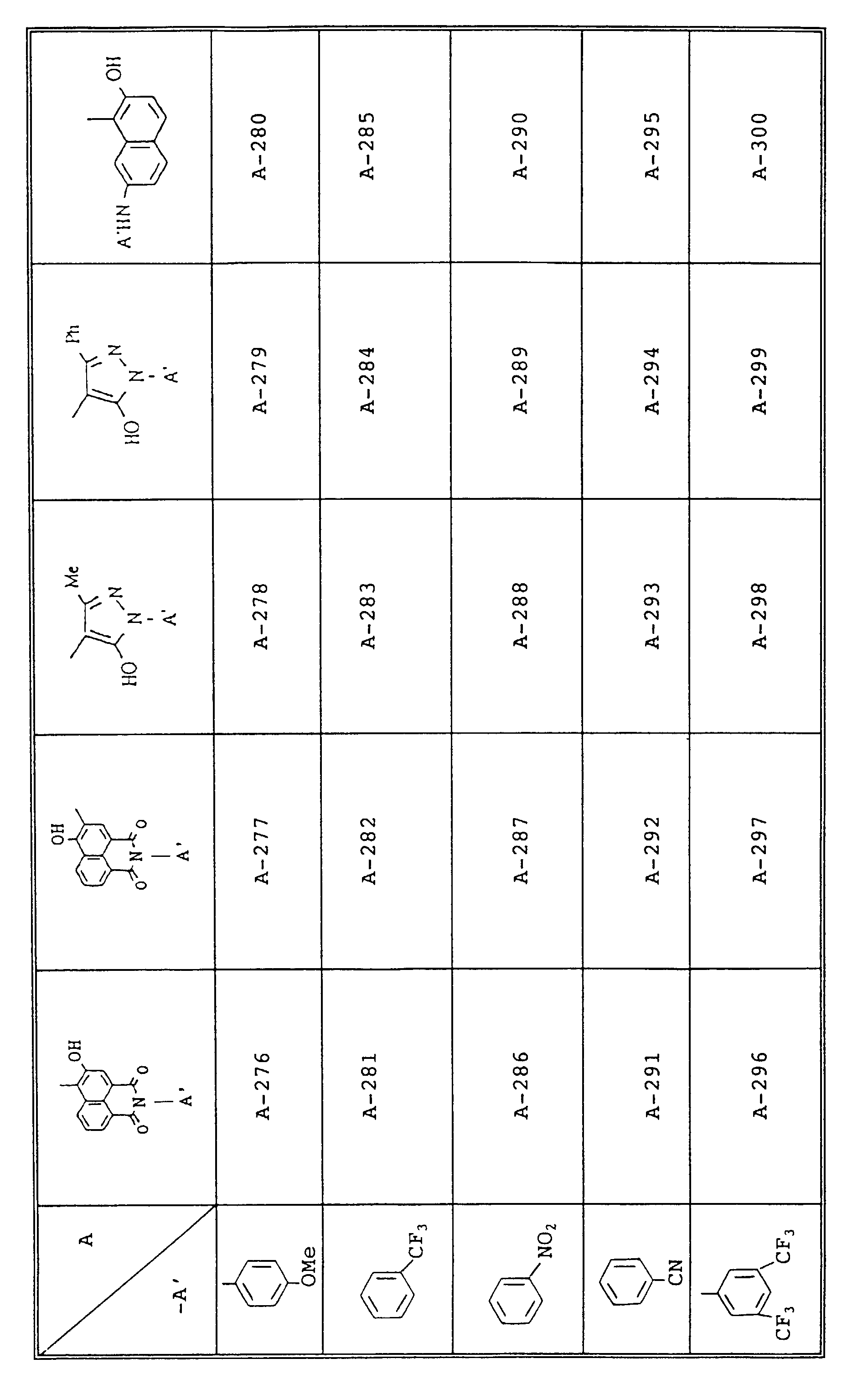

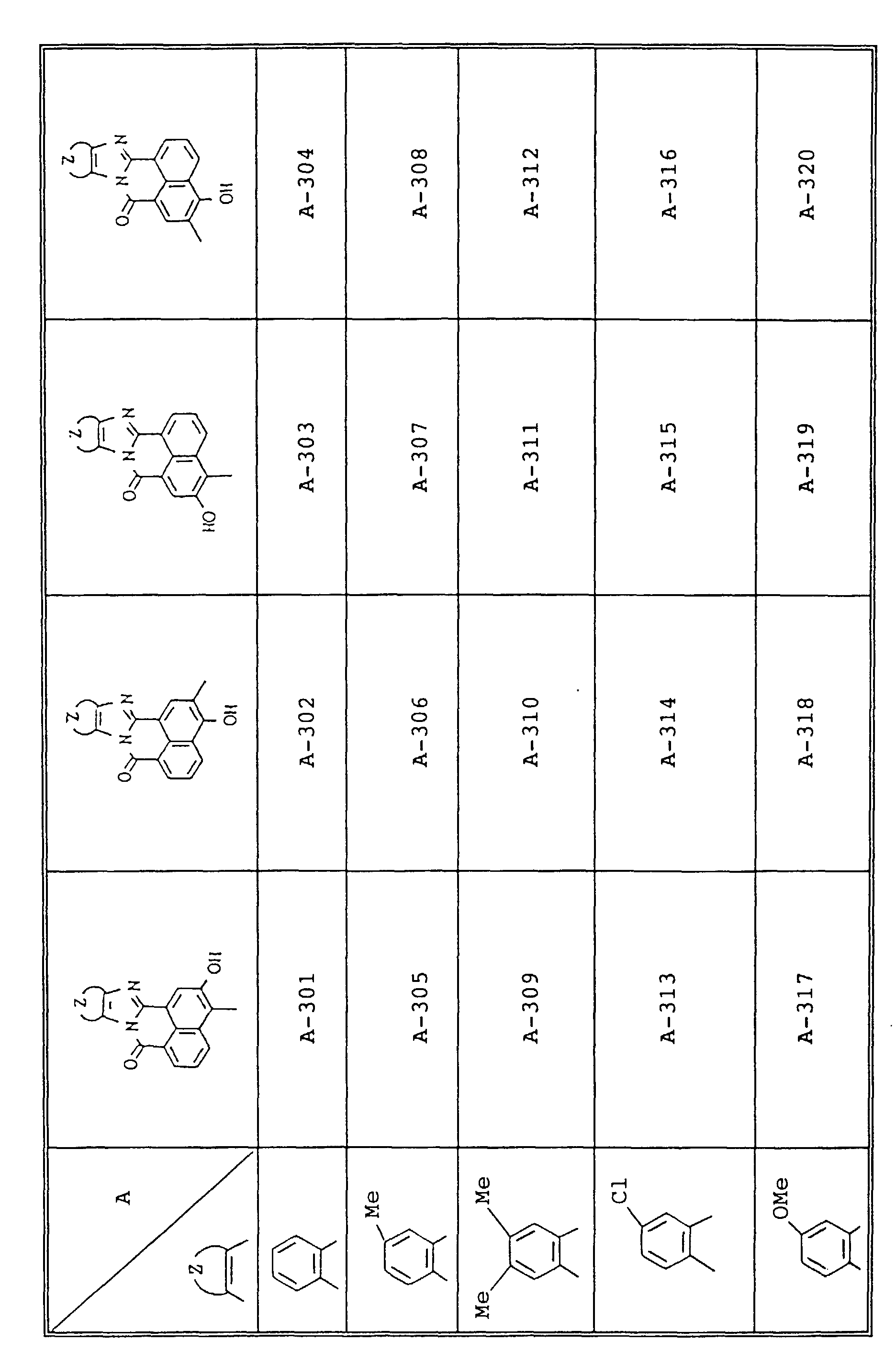

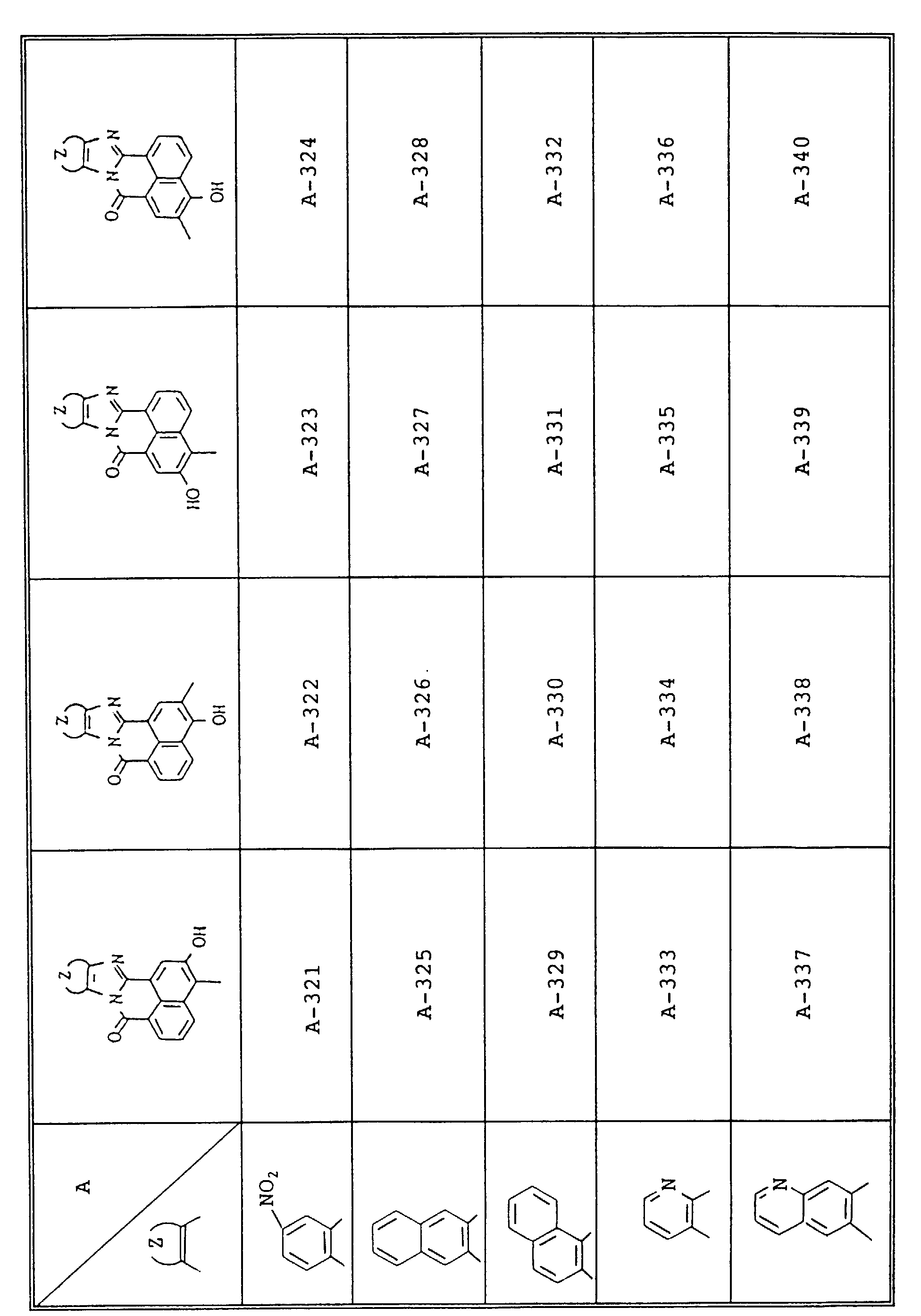

Examples of the azo pigments represented by the formula (I) are shown in the following table. These azo pigments comprise optional combinations with the above enumerated coupler residues.

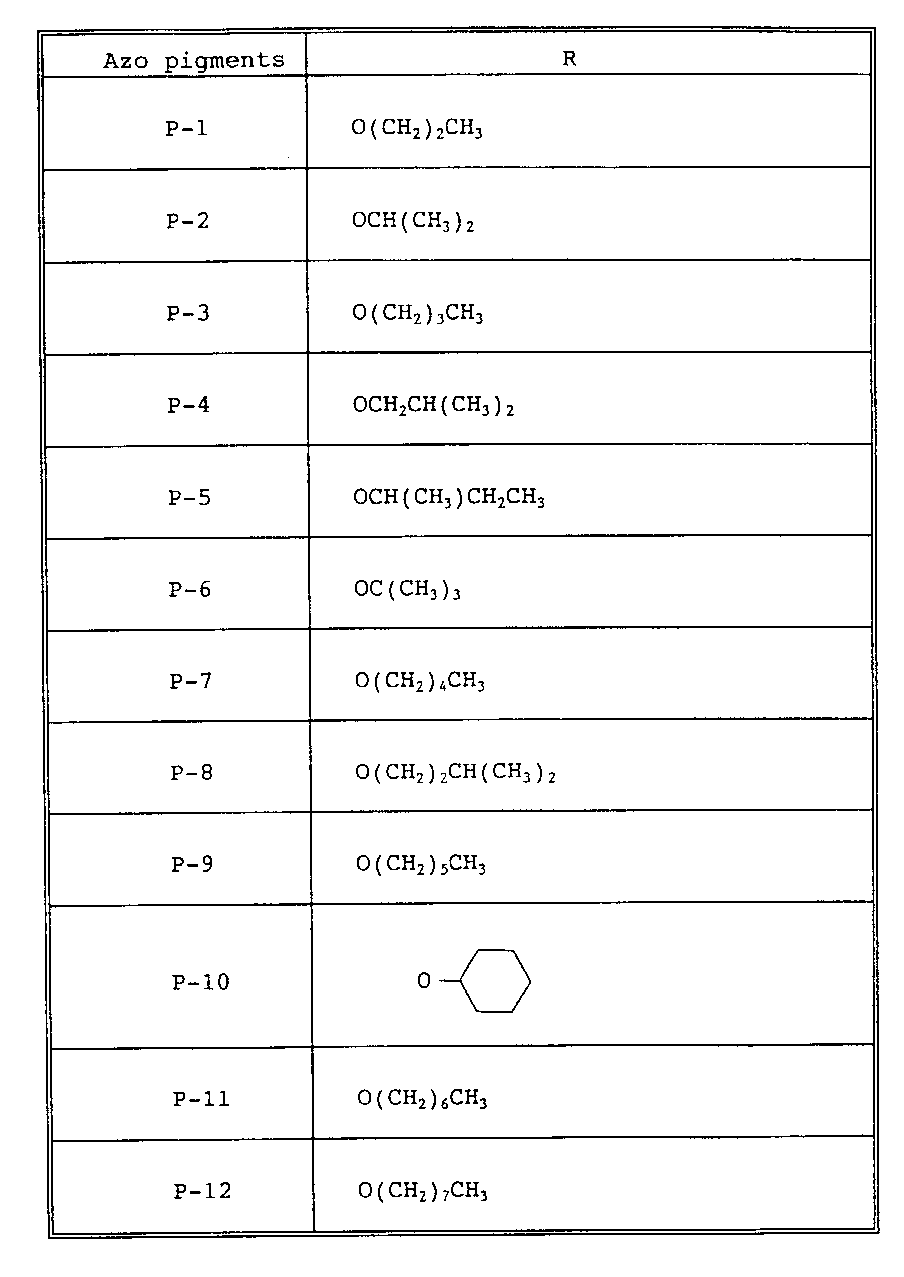

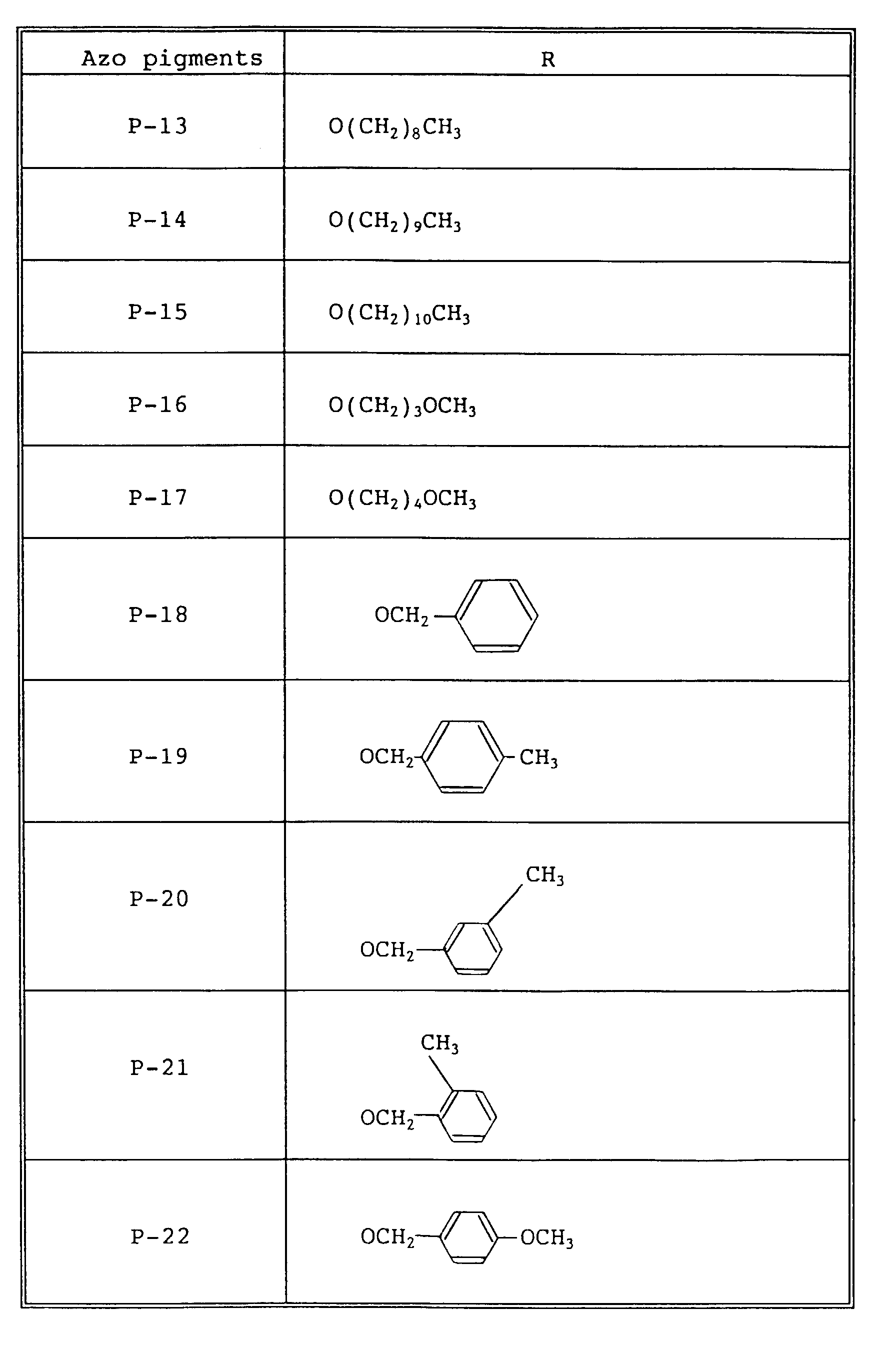

The azo pigments represented by the formula (I) can be easily synthesized by tetrazotizing a diamino compound represented by the following formula (wherein R has the same meaning as in the formula (I)) by conventional method and then coupling the resulting tetrazonium salt with a corresponding coupler in the presence of an alkali or by once isolating the tetrazonium salt in the form of borofluoride salt or zinc chloride double salt and then coupling the salt with the coupler in a suitable solvent such as N,N-dimethylformamide, dimethylsulfoxide, ethanol, dioxane, or the like in the presence of an organic or inorganic alkali.

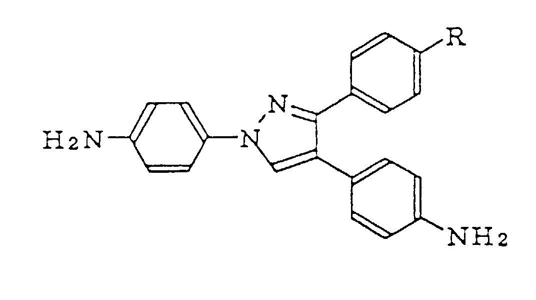

The electrophotographic photoreceptors of the present invention have a light-sensitive layer containing at least one of the azo pigments represented by the formula (I). Light-sensitive layers of the following types (1) to (4) are known and the light-sensitive layer of the electrophotographic photoreceptors of the present invention may be any of these known layers.
(1) Light-sensitive layer comprising an azo pigment.
(2) Light-sensitive layer comprising a binder in which the azo pigment is dispersed.
(3) Light-sensitive layer in which the azo pigment is dispersed together with a charge transport material.
(4) Light-sensitive layer comprising a laminate of one of the above layers (1) to (3) as a charge generation layer and a charge transport layer containing a charge transport material.

The azo pigments represented by the formula (I) generate a charge carrier in a very high efficiency upon absorbing light. The generated carriers can be transported through the azo pigment as a medium, but preferably they are transported through a known charge transport material as a medium. For this reason, the light-sensitive layers of the types (3) and (4), namely, function-separated type light-sensitive layers are especially preferred.

Charge transport materials are generally classified to two kinds, the electron transport materials and the hole transport materials. As the hole transport materials, electron donative organic photoconductive compounds are used, and as examples of these compounds, mention may be made of oxadiazoles disclosed in Japanese Patent Kokoku No.34-5466, triphenylmethanes disclosed in Japanese Patent Kokoku No.45-555, pyrazolines disclosed in Japanese Patent Kokoku No.52-4188, hydrazones disclosed in Japanese Patent Kokoku No.55-42380, oxadiazoles disclosed in Japanese Patent Kokai No.56-123544, triarylamines disclosed in Japanese Patent Kokoku No.58-32372, and stilbenes disclosed in Japanese Patent Kokai No.58-198043.

The electron transport materials include, for example, benzoquinones such as chloranil; polycyano compounds such as tetracyanoethylene and tetracyanoquinodimethane; diphenoquinone derivatives; and polynitro compounds such as 2,4,7-trinitro-9-fluorenone, 2,4,5,7-tetranitroxanthone and 1,3,7-trinitrodibenzothiophene.

Furthermore, there may be used high molecular compounds such as poly-N-vinylcarbazole, halogenated poly-N-vinylcarbazole, polyvinylpyrene, polyvinylanthracene, polyvinylacridine, polyglycidylcarbazole, polyvinylacenaphthene, ethylcarbazoleformaldehyde resin.

In use of the charge transport materials, two or more of them can be used in admixture regardless of whether these charge transport materials are electron transporting ones or hole transporting ones, and, moreover, the charge transport materials are not limited to those mentioned here. Of these charge transport materials, hydrazone compounds, stilbene compounds and arylamine compounds are especially preferred since they have a high charge (hole) transportability and give excellent photoreceptors. For example, as the hydrazone compounds, there may be used those which are described in the above Japanese Patent Kokoku No.55-42380 and, in addition, Japanese Patent Kokai Nos.59-223432, 60-230142, 1-100555, 2-10367, 2-51163, 2-96767, 2-183260, 2-184856, 2-184858, 2-184859, and 2-226160. As the arylamine compounds, there may be used the charge transport materials described, for example, in Japanese Patent Kokai Nos.54-58445, 61-132955 and 61-134354.

The electrophotographic photoreceptors of the present invention can be made by the conventional methods. For example, electrophotographic photoreceptors having a light-sensitive layer of the type (1) mentioned above can be made by coating on an electrically conductive support a coating solution prepared by dissolving or dispersing an azo pigment represented by the formula (1) in a suitable medium and drying the coat to form a light-sensitive layer of usually 0.1 to several tens µm thick.

As the media used for preparing the coating solution, mention may be made of, for example, amines such as n-butylamine and ethylenediamine or ethers such as tetrahydrofuran and 1,4-dioxane; ketones such as methyl ethyl ketone and cyclohexanone; aromatic hydrocarbons such as toluene and xylene; non-protonic polar solvents such as N,N-dimethylformamide, acetonitrile, N-methylpyrrolidone and dimethylsulfoxide; alcohols such as methanol, ethanol and isopropanol; esters such as ethyl acetate, methyl acetate and methylcellosolve acetate; and chlorinated hydrocarbons such as dichloromethane, dichloroethane and chlorofrom.

When a medium in which the azo pigment is dispersed is used, the azo pigment must be made to fine particles of 5 µm or smaller, preferably 3 µm or smaller in particle size.

As the conductive supports, any of those which are employed for known electrophotographic photoreceptors can be used. Specifically, mention may be made of drums, sheets or belts of, for example, gold, silver, platinum, titanium, aluminum, copper, zinc, iron, and metal oxides subjected to conductive treatment, laminates of foils of these metals or drums, sheets or belts on which the metals are vapor deposited.

Furthermore, there may be used drums, sheets or belts formed of plastics, ceramics and papers subjected to conductive treatment by coating conductive materials such as metal powders, metal oxides, carbon blacks, carbon fibers, copper iodide, charge transfer complexes, inorganic salts, and ion conductive poly-electrolytes together with appropriate binders to embed the materials in polymer matrixes, and drums, sheets or belts of plastics, ceramics and papers rendered conductive by containing these conductive materials.

The electrophotogrpahic photoreceptors having a light-sensitive layer of the type (2) can be produced by dissolving a binder in the coating solution used in forming the light-sensitive layer of the type (1). In this case, the medium of the coating solution is preferably one which dissolves the binder.

As the binder resins, mention may be made of, for example, polymers or copolymers of vinyl compounds such as styrene, vinyl acetate, acrylate esters and methacrylate esters, silicone resins, phenoxy resins, butyral resins, formal resins, phenolic resins, polycarbonate resins, polyarylate resins, polyamide resins, polyimide resins, epoxy resins, and urethane resins. The binder is used in an amount of 0.1-5 parts by weight based on the azo pigment. In forming the light-sensitive layer of this type, it is preferred to allow the azo pigment to be present in the form of fine particles of, for example, 3 µm or smaller in particle size in the binder.

The electrophotographic photoreceptors having a light-sensitive layer of the type (3) can be produced by dissolving a charge transport material in the coating solution used for forming the light-sensitive layer of the type (1). As the charge transport material, there may be used any of those which are exemplified hereabove. In this case, except for the charge transport materials which per se can be used as binders, such as polyvinylcarbazole and polyglycidylcarbazole, low molecular weight charge transport materials are preferably used together with binders. As the binders, there may be used any of those which are exemplified hereabove.

In this case, amount of the binder is 0.5-100 parts by weight based on the azo pigment. Amount of the charge transport material is 0.2-3.0 parts by weight, preferably 0.3-1.2 parts by weight based on the binder. The charge transport material which per se can be used as a binder is generally used in an amount of 1-10 parts by weight based on the azo pigment. The azo pigment is preferably allowed to be present in the form of fine particles in the high molecular charge transport material or the binder.

The electrophotographic photoreceptors having a light-sensitive layer of the type (4) can be produced by coating a coating solution obtained by dissolving a charge transport material in a suitable medium on the light-sensitive layer of the types (1)-(3) and drying the coat to form a charge transport layer. In this case, the light-sensitive layer of the types (1)-(3) serves as a charge generation layer and the film thickness is preferably 0.1-20 µm. The charge transport layer is not necessarily provided above the charge generation layer and may be provided between the charge generation layer and the conductive support. However, it is preferably provided above the charge generation layer from the point of endurance.

The charge transport layer can be formed in the same manner as in forming the light-sensitive layer of the type (3). That is, there may be used the coating solution used for the formation of the light-sensitive layer of the type (3) from which the azo pigment is omitted. The charge transport layer generally has a thickness of 5-50 µm.

The electrophotographic photoreceptors of the present invention may contain ultraviolet absorbers of benzophenone or benzotriazole type and antioxidants of hinered amine type, phenol type, sulfur type or phosphorus type as described in "The Newest Techniques of Polymer Additives" (published from CMC Co., Ltd. in 1988). They may further contain known sensitizers. Suitable sensitizers are dyes and Lewis acids which form a charge transfer complex with organic photoconductive materials.

As examples of the Lewis acids, mention may be made of electron attracting compounds, for example, quinones such as chloranil, 2,3-dichloro-1,4-naphthoquinone, 2-methylanthraquinone, 1-nitroanthraquinone, 1-chloro-5-nitroanthraquinone, 2-chloroanthraquinone, and phenanthrenequinone; aldehydes such as 4-nitrobenzaldehyde; ketones such as 9-benzoylanthracene, indandione, 3,5-dinitrobenzophenone and 3,3',5,5'-tetranitrobenzophenone; acid anhydrides such as phthalic anhydride and 4-chloronaphthalic anhydride; cyano compounds such as tetracyanoethylene, terephthalmalonodinitrile and 4-nitrobenzalmalonodinitrile; and phthalides such as 3-benzalphthalide, 3-(α-cyano-p-nitrobenzal)phthalide and 3-(α-cyano-p-chlorobenzal)phthalide.

As the dyes, mention may be made of, for example, triphenylmethane dyes such as Methyl Violet, Brilliant Green and Crystal Violet; thiazine dyes such as Methylene Blue; quinone dyes such as quinizarin; cyanine dyes; pyrylium salts; thiapyrylium salts; and benzopyrylium salts.

The light-sensitive layer of the electrophotographic photoreceptors of the present invention may further contain inorganic photoconductive fine particles such as selenium and selenium-arsenic alloy and organic photoconductive pigments such as phthalocyanine pigment, perylene pigment and anthanthrone pigment. It may further contain plasticizers for improving film-formability, flexibility and mechanical strength. The plasticizers include, for example, phthalic esters, phosporic esters, epoxy compounds, chlorinated paraffins, chlorinated fatty acid esters and aromatic compounds such as alkylated naphthalenes.

Furthermore, if necessary, a blocking layer for controlling the injection of charges into the conductive support from the light-sensitive layer may be provided between the light-sensitive layer and the conductive support. In addition, a surface protective layer may be provided on the surface of the light-sensitive layer to improve the endurance of the photoreceptor.

The present invention will be explained in more detail by the following nonlimiting examples.

### Example 1

One part by weight of the above-exemplified compound P-1 (coupler residue: A-6) as a bisazo pigment and 1 part by weight of a phenoxy resin (PKHJ manufactured by Union Carbide Corp.) were mixed with 100 parts by weight of dimethoxyethane and were subjected to dispersion treatment together with glass beads for 2 hours by a paint conditioner. The resulting pigment dispersion was coated on an aluminum-vapor deposited film (METALUMY manufactured by Toray Industries, Inc.) by an applicator and dried at 80°C for 30 minutes to form a charge generation layer of about 0.2 µm thick.

Then, 10 parts by weight of a hydrazone compound having the following formula and 10 parts by weight of a polyarylate resin (U-Polymer manufactured by Unitika, Ltd.) were dissolved in 200 parts by weight of dichloromethane, and the solution was coated on the above charge generation layer by an applicator and dried at 80°C for 60 minutes to form a charge transport layer of 20 µm thick.

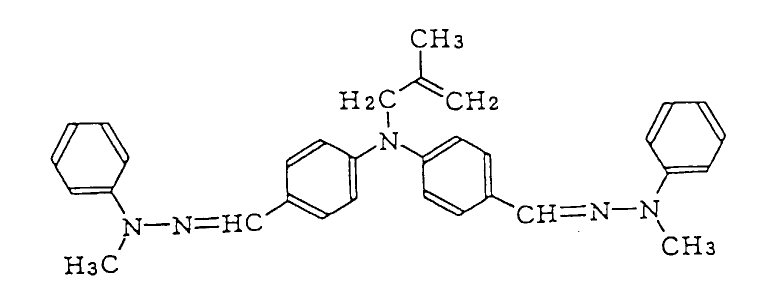

The thus obtained laminate type electrophotographic photoreceptor was stored in the dark at room temperature for 24 hours and, thereafter, evaluated on electrophotographic characteristics by an electrostatic recording test apparatus (SP-428 manufactured by Kawaguchi Electric Mfg. Co., Ltd.). The measuring conditions were as follows: corona voltage: -6 kV; static mode No.3 (namely, processing speed 167 mm/sec); illuminance of irradiated light (white light) at the surface: 2 lux. As a result, a charging potential of -705 V and a half decay exposure of 1.3 lux•sec were obtained, which are indicative of very high sensitivity.

Furthermore, the photoreceptor was irradiated with a white light of 5000 lux for 5 minutes to conduct evaluation on pre-exposure characteristics. Results of the evaluation conducted under the same conditions as above were a charging potential of -649 V and a half decay exposure of 1.3 lux•sec, which are indicative of stable characteristics with less change in the charging potential which may be caused by the pre-exposure.

Furthermore, the pigment dispersion prepared above was stored at room temperature for 24 hours and, then, the state of the dispersion was visually evaluated to find that no change with time of the dispersion such as agglomeration or sedimentation occurred and the coating solution obtained was stable.

### Examples 2-8 and Comparative Examples 1-3

Laminate type photoreceptors were prepared in the same manner as in Example 1, except that the azo pigment was varied as shown in Tables 1 and 2, and they were tested on half decay exposure and pre-exposure characteristics and on the change with time of the pigment dispersion under the same conditions as in Example 1. The results are shown in Table 3. In Table 3, the dispersibility is expressed by the result obtained by visually comparing the dispersion just after dispersed and the dispersion after left to stand for 24 hours. "ⓞ" indicates that no change occurred in the dispersion after left to stand for 24 hours, "A" indicates that some agglomeration occurred, "×" indicates that considerable agglomeration or sedimentation occurred, and "××" indicates that the dispersion gelled due to considerable agglomeration. The comparative azo pigments in Table 2 are the azo pigments represented by the formula (I) where R is as shown in Table 2.

**Table 1**

| | Azo pigments | Coupler residues |
|---|---|---|
| Example 2 | P-1 | A-21 |
| Example 3 | P-3 | A-6 |
| Example 4 | P-3 | A-21 |
| Example 5 | P-3 | A-115 |
| Example 6 | P-3 | A-166 |
| Example 7 | P-16 | A-6 |
| Example 8 | P-16 | A-81 |

**Table 2**

| | Comparative azo pigments | R | Coupler residue |
|---|---|---|---|
| Comparative Example 1 | B1 | OCH₃ | A-6 |
| Comparative Example 2 | B2 | OPh | A-6 |
| Comparative Example 3 | B3 | H | A-6 |

**Table 3**

| | Before pre-exposure | | After pre-exposure | | Dispersibility |
|---|---|---|---|---|---|
| | Charging potential (V) | Half decay exposure (lux·sec) | Charging potential (V) | Half decay exposure (lux•sec) | |
| Example 1 | -705 | 1.3 | -649 | 1.3 | ⓞ |
| Example 2 | -693 | 1.2 | -624 | 1.1 | ⓞ |
| Example 3 | -688 | 1.3 | -626 | 1.2 | ⓞ |
| Example 4 | -715 | 1.1 | -629 | 1.1 | ⓞ |
| Example 5 | -718 | 1.5 | -610 | 1.3 | ⓞ |
| Example 6 | -690 | 1.3 | -600 | 1.2 | ⓞ |
| Example 7 | -692 | 1.4 | -623 | 1.4 | ⓞ |
| Example 8 | -711 | 1.5 | -583 | 1.4 | ⓞ |
| Comparative Example 1 | -708 | 1.8 | -517 | 1.7 | × |
| Comparative Example 2 | -355 | 4.8 | -301 | 4.5 | ×× |
| Comparative Example 3 | -680 | 2.5 | -449 | 2.2 | △ |

### Example 9

One part by weight of the above-exemplified compound P-3 (coupler residue: A-6) and 40 parts by weight of tetrahydrofuran were subjected to dispersing treatment together with zirconia beads by a ball mill for 48 hours. To the resulting dispersion were added 2.5 parts by weight of N-ethylcarbazole-3-carboaldehydediphenylhydrazone, 10 parts by weight of a polycarbonate resin (PCZ-200 manufactured by Mitsubishi Gas Chemical Company, Inc.) and 60 parts by weight of tetrahydrofuran. The mixture was subjected to an ultrasonic dispersion treatment for 2 minutes. Then, the resulting dispersion was coated on an aluminum-vapor deposited polyester by an applicator to form a photoreceptor of about 15 µm in film thickness.

The thus obtained single-layer type electrophotographic photoreceptor was stored in the dark at room temperature for 24 hours and, thereafter, evaluated on electrophotographic characteristics by an electrostatic recording test apparatus (SP-428 manufactured by Kawaguchi Electric Mfg. Co., Ltd.). The measuring conditions were as follows: corona voltage: +5 kV; static mode No.3 (namely, processing speed 167 mm/sec); and illuminance of irradiated light (white light) at the surface: 2 lux. As a result, a charging potential of +665 V and a half decay exposure of 1.5 lux•sec. were obtained, which are indicative of high sensitivity.

Furthermore, the photoreceptor was evaluated on characteristics in repeated use by subjecting it to test cycles [one cycle comprising charging-discharging (discharging light: irradiation of white light of 400 lux in illuminance for 1 second)] using the same apparatus as used above. Change of charging potential after the photoreceptor was subjected to 5000 cycles was examined to obtain a charging potential of +585 V and a half decay exposure of 1.6 lux•sec which show that the characteristics are stable with less reduction of potential after repeated use.

Furthermore, it was found that the mixed dispersion of the pigment and the charge transport material was a dispersion excellent in coatability and stable with less change with time.

### Examples 10-14 and Comparative Examples 4-6

Table 4 shows comparative azo pigments which are azo pigments represented by the formula (I) where the carbon number of R is 2 or less and R is phenyl group. Single-layer type photoreceptors were prepared in the same manner as in Example 7, except that the azo pigment was varied as shown in Tables 4 and 5, and they were tested on half decay exposure and characteristics in repeated use under the same conditions as in Example 7. The results are shown in Table 6. In Table 6, the dispersibility is expressed by the result obtained by visually evaluating the state of dispersion just after dispersing. "ⓞ" indicates that the dispersion state was good and the dispersion was superior in coatability, "×" indicates that agglomeration occurred just after dispersing, and "××" indicates that the dispersion gelled due to considerable agglomeration just after dispersing.

**Table 4**

| | Comparative azo pigment | R | Coupler residues |
|---|---|---|---|
| Comparative Example 4 | B4 | OCH₃ | A-21 |
| Comparative Example 5 | B5 | OCH₂CH₃ | A-21 |
| Comparative Example 6 | B6 | OPh | A-21 |

**Table 5**

| | Azo pigments | Coupler residues |
|---|---|---|
| Example 10 | P-3 | A-21 |
| Example 11 | P-8 | A-21 |
| Example 12 | P-8 | A-81 |
| Example 13 | P-18 | A-21 |
| Example 14 | P-18 | A-115 |

**Table 6**

| | After the 1st cycle | | After the 5000th cycle | | Dispersibility |
|---|---|---|---|---|---|
| | Charging potential (V) | Half decay exposure (lux•sec) | Charging potential (V) | Half decay exposure (lux•sec) | |
| Example 10 | +662 | 1.5 | +595 | 1.7 | ⓞ |
| Example 11 | +685 | 1.4 | +592 | 1.7 | ⓞ |
| Example 12 | +655 | 1.8 | +578 | 2.0 | ⓞ |
| Example 13 | +688 | 1.4 | +609 | 1.5 | ⓞ |
| Example 14 | +674 | 1.8 | +604 | 1.9 | ⓞ |
| Comparative Example 4 | +653 | 1.9 | +478 | 2.0 | × |
| Comparative Example 5 | +660 | 1.7 | +466 | 1.8 | × |
| Comparative Example 6 | +230 | not half decated | - | - | × |

From these results, it can be seen that the photoreceptors of the present invention shown in Examples are superior to those of Comparative Examples in the electrophotographic characteristics, especially, stability in repeated use and pre-exposure characteristics and are equal to or higher than the latter in sensitivity characteristics. These results show that the photoreceptors of the present invention can be used by mounting on medium to high speed output machines, for example, copying machines capable of copying 40 or more sheets per minute. It can be further seen that dispersibility of the azo pigments in Examples is markedly improved over that of the azo pigments in Comparative Examples, and the azo pigments of the present invention give stable dispersions superior in coatability and less in change with time.

### Example 15

One part by weight of the above-exemplified azo pigment P-1 (coupler residue: A-6) as a charge generation material and 1 part by weight of a butyral resin (#3000-K manufactured by Denki Kagaku Kogyo K.K.) were mixed with 50 parts by weight of tetrahydrofuran and were dispersed together with glass beads for 2 hours by a paint conditioner. The resulting pigment dispersion was dip coated on a metallic aluminum drum (JIS #1050 having a diameter of 80 mm) and dried at 80°C for 30 minutes to form a charge generation layer of about 0.2 µm thick.

Then, 10 parts by weight of a stilbene compound having the following formula and 10 parts by weight of a polycarbonate resin (Z-200 manufactured Mitsubishi Gas Chemical Company, Inc.) were dissolved in 160 parts by weight of dichloroethane, and the solution was similarly dip coated on the above charge generation layer and dried at 80°C for 60 minutes to form a charge transport layer of 20 µm thick.

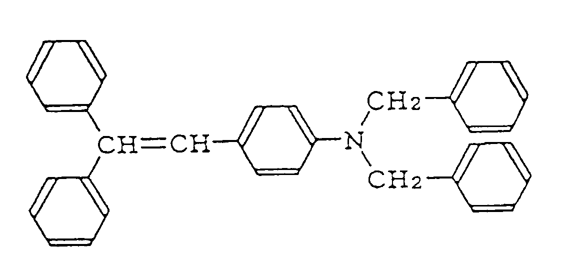

The thus obtained drum photoreceptor was mounted on a commercially available copying machine (capable of copying 40 sheets per minute with an output of A4 size), and 5000 copies were made. As a result, clear images with no fog were stably obtained.

As is clear from the above explanation, the present invention provides electrophotographic photoreceptors which have high sensitivity, are excellent in characteristics of repeated use and pre-exposure characteristics, and can be easily produced.

## Claims

1. An electrophotographic photoreceptor which comprises a conductive support having thereon a light-sensitive layer, characterized in that said light-sensitive layer contains an azo pigment represented by the following formula (I): 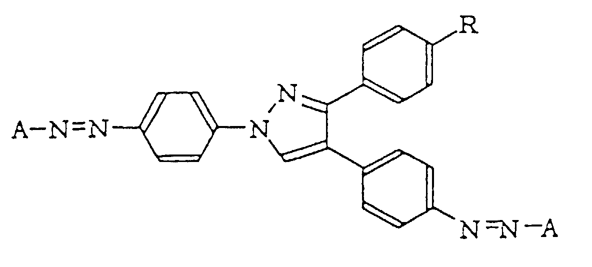 wherein R represents an unsubstituted or substituted alkoxy group of 3 or more carbon atoms and A represents a coupler residue.

2. An electrophotographic photoreceptor according to claim 1 wherein R in the formula (I) represents an alkoxy group selected from the group consisting of n-propoxy group, isopropoxy group, n-butoxy group, isobutoxy group, tert-butoxy group, n-pentyloxy group, n-hexyloxy group, cyclohexyloxy group, n-decyloxy group, 3-methoxy-1-propoxy group, 4-ethoxy-1-butoxy group, benzyloxy group, 2-methylbenzyloxy group, 4-methylbenzyloxy group and 4-methoxybenzyloxy group.

3. An electrophotographic photoreceptor according to claim 1 wherein A in the formula (I) is a coupler residue represented by the following formula: 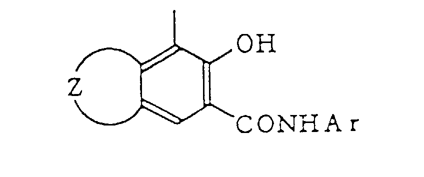 wherein Z represents a group of atoms necessary to form an unsubstituted or substituted aromatic ring or heterocyclic ring which condensates with the benzene ring and Ar represents an unsubstituted or substituted aryl group or heterocyclic ring.

4. An electrophotographic photoreceptor according to claim 1 wherein the light-sensitive layer contains a binder for the azo pigment.

5. An electrophotographic photoreceptor according to claim 1 wherein the light-sensitive layer additionally contains one or more charge transport materials.

6. An electrophotographic photoreceptor according to claim 1 wherein the light-sensitive layer comprises a charge generation layer containing the azo pigment and a charge transport layer containing one or more charge transport materials.

7. In an electrophotographic process where an electrostatic charge pattern is formed on an electrophotographic photoreceptor, the improvement characterized in that said electrophotographic photoreceptor has a light-sensitive layer containing an azo pigment represented by the following formula (I): 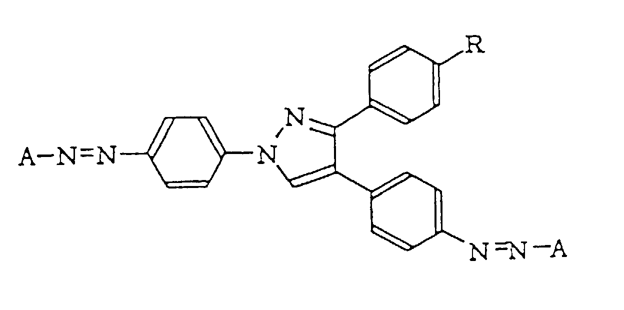 wherein R represents an unsubstituted or substituted alkoxy group of 3 or more carbon atoms and A represents a coupler residue.

## Patentansprüche

1. Elektrophotographischer Photorezeptor, der einen leitfähigen Träger, auf dem eine lichtempfindliche Schicht ausgebildet ist, umfaßt,
dadurch **gekennzeichnet,** daß
die lichtempfindliche Schicht ein Azo-Pigment enthält, das durch die folgende Formel (I) dargestellt wird: 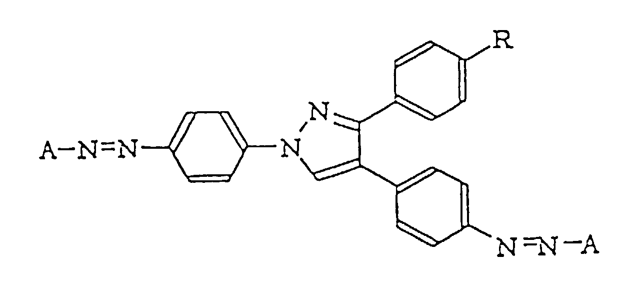 worin R eine unsubstituierte oder substituierte Alkoxy-Gruppe mit 3 oder mehr Kohlenstoffatomen darstellt, und A einen Kupplerrest darstellt.

2. Elektrophotographischer Photorezeptor nach Anspruch 1, wobei R in der Formel (I) eine Alkoxy-Gruppe darstellt, die aus der Gruppe bestehend aus der n-Propoxy-Gruppe, Isopropoxy-Gruppe, n-Butoxy-Gruppe, Isobutoxy-Gruppe, tert-Butoxy-Gruppe, n-Pentyloxy-Gruppe, n-Hexyloxy-Gruppe, Cyclohexyloxy-Gruppe, n-Decyloxy-Gruppe, 3-Methoxy-1-propoxy-Gruppe, 4-Ethoxy-1-butoxy-Gruppe, Benzyloxy-Gruppe, 2-Methylbenzyloxy-Gruppe, 4-Methylbenzyloxy-Gruppe und der 4-Methoxybenzyloxy-Gruppe ausgewählt ist.

3. Elektrophotographischer Photorezeptor nach Anspruch 1, wobei A (I) ein Kupplerrest ist, der durch die folgende Formel dargestellt wird: 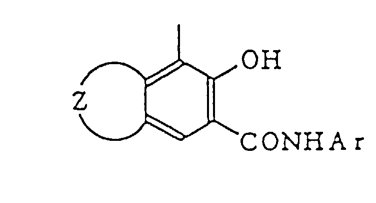 worin Z eine Atomgruppe darstellt, die notwendig ist, um einen unsubstituierten oder substituierten aromatischen oder heterocyclischen Ring, der mit dem Benzol-Ring kondensiert, zu bilden, und Ar eine unsubstituierte oder substituierte Aryl-Gruppe oder einen unsubstituierten oder substituierten heterocyclischen Ring darstellt.

4. Elektrophotographischer Photorezeptor nach Anspruch 1, in dem die lichtempfindliche Schicht ein Bindemittel für das Azo-Pigment enthält.

5. Elektrophotographischer Photorezeptor nach Anspruch 1, in dem die lichtempfindliche Schicht zusätzlich ein oder mehrere Ladungstransportmaterialien enthält.

6. Elektrophotographischer Photorezeptor nach Anspruch 1, in dem die lichtempfindliche Schicht eine Ladungserzeugungsschicht, die ein Azo-Pigment enthält, und eine Ladungstransportschicht, die ein oder mehrere Ladungstransportmaterialien enthält, umfaßt.

7. Verbesserung eines elektrophotographischen Verfahrens, in dem ein statisches Aufladungsmuster auf einem elektrophotographischen Photorezeptor gebildet wird, dadurch **gekennzeichnet,** daß
der elektrophotographische Photorezeptor eine lichtempfindliche Schicht hat, die ein Azo-Pigment enthält, das durch die folgende Formel (I) dargestellt wird: 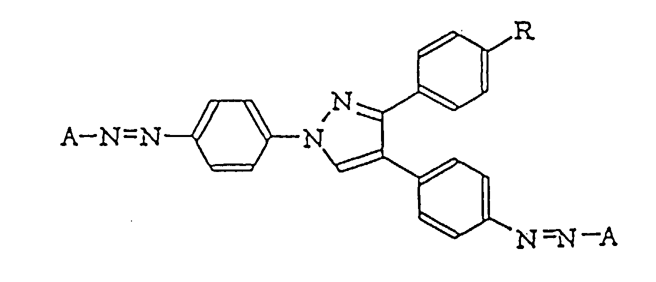 worin R eine unsubstituierte oder substituierte Alkoxy-Gruppe mit 3 oder mehr Kohlenstoffatomen darstellt, und A einen Kupplerrest darstellt.

## Revendications

1. Photorécepteur électrophotographique qui comprend un support conducteur portant une couche sensible à la lumière, caractérisé en ce que ladite couche sensible à la lumière contient un pigment azoïque représenté par la formule (I) suivante : 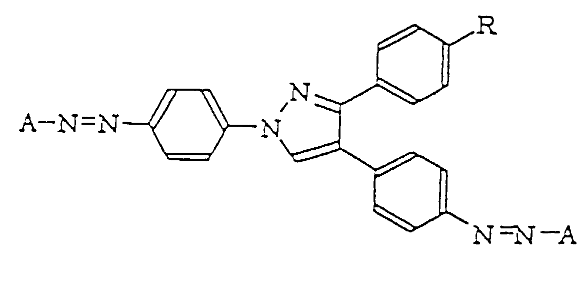 dans laquelle R représente un groupe alcoxy non substitué ou substitué comportant 3 ou plus de 3 atomes de carbone et A représente un reste d'agent de couplage.

2. Photorécepteur électrophotographique selon la revendication 1, dans lequel R dans la formule (I) représente un groupe alcoxy choisi dans le groupe constitué par un groupe n-propoxy, un groupe isopropoxy, un groupe n-butoxy, un groupe isobutoxy, un groupe tert-butoxy, un groupe n-pentyloxy, un groupe n-hexyloxy, un groupe cyclohexyloxy, un groupe n-décyloxy, un groupe 3-méthoxy-1-propoxy, un groupe 4-éthoxy-1-butoxy, un groupe benzyloxy, un groupe 2-méthylbenzyloxy, un groupe 4-méthylbenzyloxy et un groupe 4-méthoxybenzyloxy.

3. Photorécepteur électrophotographique selon la revendication 1, dans lequel A dans la formule (I) est un reste d'agent de couplage représenté par la formule suivante : 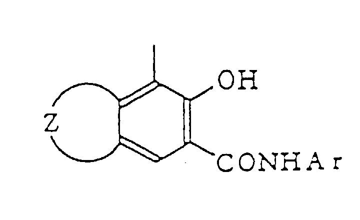 dans laquelle Z représente un groupe d'atomes nécessaires pour former un noyau hétérocyclique ou noyau aromatique substitué ou non substitué qui se condense au noyau benzène et Ar représente un noyau hétérocyclique ou groupe aryle substitué ou non substitué.

4. Photorécepteur électrophotographique selon la revendication 1, dans lequel la couche sensible à la lumière contient un liant pour le pigment azoïque.

5. Photorécepteur électrophotographique selon la revendication 1, dans lequel la couche sensible à la lumière contient en outre un ou plusieurs matériaux de transport de charge.

6. Photorécepteur électrophotographique selon la revendication 1, dans lequel la couche sensible à la lumière comprend une couche de génération de charge contenant le pigment azoïque et une couche de transport de charge contenant un ou plusieurs matériaux de transport de charge.

7. Amélioration dans un procédé électrophotographique dans lequel un motif de charge électrostatique est formé sur un photorécepteur électrophotographique, caractérisée en ce que ledit photorécepteur électrophotographique a une couche sensible à la lumière contenant un pigment azoïque représenté par la formule (I) suivante : 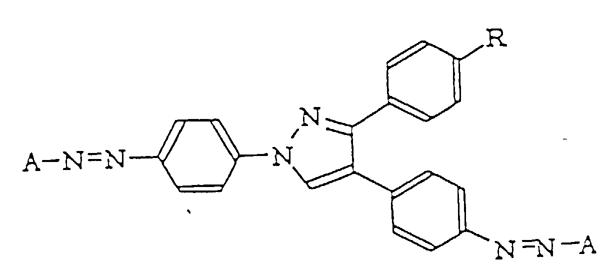 dans laquelle R représente un groupe alcoxy non substitué ou substitué comportant 3 ou plus de 3 atomes de carbone et A représente un résidu d'agent de couplage.
